# EUROPEAN PATENT SPECIFICATION

(11) **EP 0 783 248 B1**
(45) Date of publication and mention of the grant of the patent: **18.11.1998**
(21) Application number: 95933417.8
(22) Date of filing: 22.09.1995
(51) Int. Cl.: A21D 6/00, A21D 2/18, A21D 2/26

(54) **READY-TO-BAKE BREAD DOUGHS**
BROT-FERTIGTEIGSTÜCKE
PATES A PAIN PRETES A CUIRE

(30) Priority: 27.09.1994 EP 94202775
(43) Date of publication of application: 16.07.1997
(73) Proprietor: UNILEVER N.V., 3013 AL Rotterdam (NL); UNILEVER PLC, London EC4P 4BQ (GB)
(72) Inventor: ORTIZ, Angel, 08480 L'Ametlla des Valles (ES); SANDERS, Johannes Cornelis, 3137 AJ Vlaardingen (NL)
(74) Representative: Sikken, Antonius H. J. M.
(86) International application number: EP9503749
(87) International publication number: WO9609768

(56) References cited:
- EP-A- 0 265 003
- EP-A- 0 305 105
- WO-A-93/22928
- GB-A- 2 252 892

## Description

In order to come to more convenient dough-systems, that enables a baker to prepare a dough on one day and to bake a dough-product made from it on a later day, several solutions have been given in the prior art. In our European Patent 493,850 we have disclosed preproofed, frozen croissants that can be baked without thawing, that contain a gelatin-relating compound in order to retain the CO₂, developed by the proofing in the frozen dough-system. Above products however, mean that a proofing-process has still to be performed resulting in frozen, proofed dough-systems that are very vulnerable during transportation. Moreover the total volume that must be transported is higher for proofed than for unproofed doughs.

An even more convenient solution would be, if dough systems could be found that contain a leavener, such as yeast, but that do not need to be preproofed. After freezing of the dough-system it should be possible to obtain baked products with good specific volume and ovenspring without thawing and proofing of the dough system prior to baking. In the prior art some solutions, suitable for laminated doughs are disclosed, which would lead to such so called ready-to-bake laminated dough systems. E.g. in WO 92/18010 or DE 4,118,024 laminated dough-systems are disclosed, wherein a dough is made from flour, yeast and liquid, the dough is kneaded and laminated with fat. Essential is that the fat is not present in the dough, but is only incorporated in the laminated product as laminate-fat. We found that above process leads to laminated products that display slightly better specific volumes and ovenspring than products made according to the more conventional techniques. However, the s.v. and ovenspring of the products were still inacceptably low for the baker and the consumer. Another solution was presented in EP 561,702. According to this patent-application ready-to-bake frozen croissants were made, wherein the total amount of fat-layers was greater than 50.

Those products can contain three additives, i.e.
- an acidifier
- a thickener or gelatinizing agent
- a lipolytic enzyme.

As examples of the thickeners and gelatinizing agents are mentioned: carboxymethyl cellulose (also illustrated in the example), guar gum, xanthan or alginate. We found that laminated products made according to this EP-application did not yet meet the standards set by the baker and the consumer.

In our copending European patent application 93203627.0 we disclose ready-to-bake, frozen, laminated doughs that display upon baking (without thawing and proofing) an ovenspring of at least 2.2 ml/g and in particular at least 4.5 ml/g (using: 50 gram product). The products obtained after baking displayed specific volumes of at least 3.5 ml/g and in particular at least 6 ml/g (again using: 50 gram product). We disclosed that such products can be obtained, when the flour-component of the dough is constituted of two components, i.e. 1) of a natural flour and 2) of an artificial flour. The artificial flour being composed of a protein, in particular a gelatin-relating compound and a modified starch. However, the above solutions only solve the problems for laminated dough systems. So far no solution was presented for bread doughs.

Therefore, our invention concerns ready-to-bake, frozen, bread dough, comprising:
- a flour-component, and (on flour):
   30 - 70 wt% of water
   0 - 10 wt% of fat
   0 - 3 wt% of milk protein
   0.5 - 8 wt% of yeast
   0.1 - 4 wt% of emulsifier
   0 - 10 wt% of sugar with the prerequisite, that if sugar is absent the amount of fat is less than 3 wt%,

wherein the flour-component is composed of:
   80 - 99 wt% of natural flour and
   20 - 1 wt% of "artificial flour"
and wherein the artificial flour consists of:
   30 - 70 wt% of a protein, in particular a gelatin-relating compound and
   70 - 30 wt% of a modified starch,

As proteins can be used gluten, whey-proteins, egg-proteins and caseinates and mixtures thereof.

Very suitable products are obtained, when a gelatin-relating compound is applied, in particular if selected from the group, consisting of: gelatin with a bloom-rate of 50 - 400; non-gelling gelatin with a bloom-rate of 0 - 50; hydrolyzed gelatin and gelatin-precursors, such as collagen. In addition to above protein some amount of bread-improving carbohydrates, such as guar gum, xanthan gum or pectin can be added to the composition. Amounts of 0.01 - 3 wt % on flour will suffice.

The starch-component of our artificial flour must be a modified starch. Preferred modified starches are the heat-stable modified starches, in particular the cross-linked starches. A typical example being a cross-linked waxy maize starch, this starch can either be pregelatinized or not. Suitable modified starches can be selected from the following group (although not restricted to this group) Ultratex-2, Instant Clearjel, Pureflo, Thermflo, National 780188, Firmtex, Hiflo, National Frigex, National Frigex HV, National Frigex L.V.; Purity VL, Collflo 67, Purity HPC, Thermtex (all from National Starch); Clearam CH-30 (from Roquette) and from Avebe the Farinex-type products: VA 70; VA 100T; CAX;TK-1; VA 70 C or CA. Preferred modified starches are derived from waxymaize or from tapioca.

Although any emulsifier can be applied, we found that a beneficial effect on product performance is obtained, when the emulsifier comprises
- a DATA -ester, that provides baking performance to the dough, or
- a lecithin, or
- a mono fatty acid ester of sucrose, preferably having 12-20 C-atoms, or
- mixtures thereof.

The DATA-ester and the mixture with the lecithin provide in particular improved appearance to the baked products. Very suitable DATA-esters are those, that have a low saponification value (sap. value < 450). Other emulsifiers, such as monoglycerides can however also be applied.

The lecithin can be any known sort of lecithin, however, it is preferred to use lecithins that have a high phospholipid-content.

Other dough-improving ingredients, such as enzymes, in particular xylanase, amyloglucosydase and/or amylase, ascorbic acid and reducing agents, such as cysteine can also be incorporated in the dough. The amounts are effective amounts, which can be derived from the prior art. Ascorbic acid is used in slightly higher amounts of more than 25 ppm (on flour), preferably more than 75 ppm. Chemical leaveners can also be added. In particular the addition of a mixture of NaHCO₃, maleic acid and tartaric acid to a yeasted dough worked well.

It was found, that any fat, known as component for enriched bread dough can be applied. However, we prefer to apply fats, derived from margarine with a hardness C according to Haighton (at 20°C) of at least 500.

The natural flour component of our doughs can be any flour, applicable according to the prior art in bread dough systems. Preferred flours are strong flours, in particular the flours with at least 11 wt% protein on dry matter are preferred.

The ready-to-bake, frozen bread doughs, according to our invention, produce upon baking for 32-34 minutes at 170°C a product with a specific volume (s.v.) of at least 2.6 ml/g, preferably at least 3.0 ml/g; in particular until 6 ml/g. Ovensprings, achieved during above baking of the frozen products (total weight 250 g, lenght: 60 cm), are at least 2.2 and most preferably at least 4.5. Ovenspring being defined as (Spec. Vol) after baking : (Spec. Vol) prior to baking.

It was found, that the above requirements for specific volume and ovenspring are easily fulfilled, when the frozen dough before baking has a specific volume of 0.8-1.6 ml/g, in particular 1.0-1.4 ml/g. These specific volumes can easily be obtained by fine-tuning of the dough-ingredients and the application of a resting time during the dough preparation.

The baked breads, obtained after baking of a moulded part of the doughs according to the invention are also part of the invention. Examples of those products are French-breads, and tin breads. It should be noted, that in the doughs for the French-breads the amount of fat is very limited (i.e.: 0 - 2 wt%). The amount of fat in the doughs for the tin breads suitably is 0.1 - 10 wt%, preferably 0.5 - 7 wt%. The sugar is absent in French-breads and can be present in the tin breads.

### Examples

### I Tin bread

| Recipe | |
|---|---|
| | K.grams |
| Flour | 100 |
| Water | 47.5 |
| Sugar | 3 |
| Bread improver (incl. carrier) | 1.03 |
| Salt | 2 |
| Modified starch | 4 |
| Gelatin | 2.4 |
| Gluten | 1 |
| Emulsifier | 0.3 |
| Fat | 4 |
| milk-protein | 1.5 |
| Yeast | 5 |

58% of the flour, 66% of the water, 66% of the sugar, 50% of the salt and 80% of the yeast were mixed and kneaded in an sprial kneader (Kemper) during 60 seconds (slow) and 5 minutes (high speed). The dough-temperature was maintained at 22°C. The dough was rested during 90 minutes. The specific volume of the dough after resting was 4 ml/g. The rest of the components (except the yeast) were added and kneaded during 2 minutes (slow) followed 12 minutes (high speed). The yeast was added between 5 and 7 minutes before finishing the kneading.

The dough with a specific volume of 0.95 ml/g, was divided in blocks of 60 gr. These blocks were formed in ball shapes and rested from 8 to 10 minutes. The volume of the piece obtained was 0.95 ml/g. The piece was frozen to -18°C. The pieces were baked in groups of 8 in closed molds of 20x10x10 cms, in a oven at 205-210°C during 65 minutes.

The tin bread obtained had a specific volume of 3.2 ml/g (so, the ovenspring was 3.36).

### II French bread

| Recipe | |
|---|---|
| | K.grams |
| Flour | 100 |
| Water | 55 |
| Bread improver (incl. carrier) | 1.03 |
| Salt | 2 |
| Modified starch | 4 |
| Gelatin | 2.4 |
| Gluten | 0.5 |
| Emulsifier | 0.3 |
| Yeast | 4 |
| Whey (incl. 1% fat) | 1.5 |
| Flavour | 0.03 |

58% of the flour, 100% of the whey, 50% of the salt 75% of the yeast and 60% of the water were mixed and kneaded in a sprial kneader (type Kemper) during 60 seconds (slow) and 5 minutes (high speed).

The temperature of the dough was maintained at 25°C. The dough was rested during 2 hours. The specific volume of the dough after resting was 4 ml/g. The rest of the components were added except the yeast and the kneading was continued during 2 minutes (slow), followed by 8 minutes (high speed). The yeast was added 5 to 7 minutes before finishing the kneading.

The dough with a specific volume of 1.0 was divided in blocks of 250 gr. These blocks were first formed in ball shapes and then in bars. After making this form a cut was made in the surface and they were frozen to -18°C. The specific volume of the finished pieces was 1.1 ml/g. The frozen pieces were baked in a oven at 170°C for 32-34 minutes and the Baguettes obtained had a specific volume of 2.95 ml/g (so, the ovenspring was 2.68).

## Claims

1. Ready-to-bake, frozen, bread dough, comprising
- a flour-component, and (on flour):
30 - 70 wt% of water
0 - 10 wt% of fat
0 - 3 wt% of milk protein
0.5 - 8 wt% of yeast, optionally combined with a chemical leavener
0.1 - 4.0 wt% of emulsifier 0 - 10 wt% of a sugar
with the prerequisite, that if sugar is absent the amount of fat is less than 3 wt%,
wherein the flour-component is composed of:
80 - 99 wt% of natural flour and
20 - 1 wt% of "artificial flour"
and wherein the artificial flour consists of:
30 - 70 wt% of a protein, in particular a gelatin-relating compound and
70 - 30 wt% of a modified starch,

2. Ready-to-bake, frozen bread dough, according to claim 1, wherein the gelatin-relating compound is selected from the group, consisting of: gelatin with a bloom-rate of 50 - 400; non-gelling gelatin with a bloom-rate of 0 - 50; hydrolyzed gelatin and gelatin-precursors, such as collagen.

3. Ready-to-bake, frozen bread dough, according to claims 1-2, wherein the modified starch is a cross-linked starch, in particular a cross-linked waxy maize starch.

4. Ready-to-bake, frozen bread dough, according to claims 1-3, wherein the emulsifier comprises:
- a DATA -ester, that provides baking performance to the dough, or
- a lecithin, or
- a mono fatty acid ester of sucrose, or
- a monoglyceride, or
- mixtures thereof.

5. Ready-to-bake, frozen bread dough, according to claims 1-4, wherein the dough further comprises one or more of the following ingredients: carbohydrate bread-improvers, enzymes, in particular xylanase, amyloglucosidase, and/or amylase, ascorbic acid and reducing agents, in particular cysteine.

6. Ready-to-bake, frozen bread dough, according to claims 1-5, wherein the fat is derived from a margarine with a hardness C, according to Haighton of at least 500 at 20 °C.

7. Ready-to-bake, frozen bread dough, according to claims 1-6, which dough has a specific volume before baking of 0.8 - 1.6 ml/g, in particular 1.0 - 1.4 ml/g.

8. Ready-to-bake, frozen bread dough, according to claims 1-7, which dough produces upon baking for 33 minutes at 170°C a product with a specific volume (s.v.) of at least 2.6 ml/g preferably at least 3.0 ml/g; in particular until 6 ml/g.

9. Ready-to-bake, frozen bread dough, according to claims 1-8, which dough displays upon baking for 33 minutes at 170°C an ovenspring of at least 2.2, in particular at least 4.5.

10. Baked French-bread or baked tinbread produced after baking of a moulded part of the bread dough, according to claims 1-9.

## Patentansprüche

1. Backfertiger, gefrorener Brotteig, umfassend
eine Mehlkomponente und (bezogen auf das Mehl):
30-70 Gew.-% Wasser,
0-10 Gew.-% Fett,
0-3 Gew.-% Milchprotein,
0,5-8 Gew.-% Hefe, fakultativ kombiniert mit einem chemischen Treibmittel,
0,1-4,0 Gew.-% Emulgator,
0-10 Gew.-% eines Zuckers, mit der Maßgabe, daß bei Abwesenheit von Zucker die Fettmenge kleiner als 3 Gew.-% ist,
worin die Mehlkomponente besteht aus:
80-99 Gew.-% natürlichem Mehl und
20- 1 Gew.-% "künstlichem Mehl"
und worin das künstliche Mehl besteht aus:
30-70 Gew.-% eines Proteins, insbesondere einer gelatineähnlichen Verbindung, und 70-30 Gew.-% einer modifizierten Stärke.

2. Backfertiger, gefrorener Brotteig nach Anspruch 1, in welchem die gelatineähnliche Verbindung aus der Gruppe ausgewählt ist, die besteht aus: Gelatine mit einer Bloomzahl von 50-400, nichtgelierender Gelatine mit einer Bloomzahl von 0-50, hydrolisierter Gelatine und Gelatinevorläufern, z.B. Collagen.

3. Backfertiger, gefrorener Brotteig nach den Ansprüchen 1 und 2, in welchem die modifizierte Stärke eine vernetzte Stärke, insbesondere eine vernetzte Wachsmaisstärke, ist.

4. Backfertiger, gefrorener Brotteig nach den Ansprüchen 1 bis 3, in welchem der Emulgator umfasst:
- einen DATA-Ester, der dem Teig Backverhalten verleiht, oder
- ein Lecithin oder
- einen Monofettsäureester von Saccharose oder
- ein Monoglycerid oder
- Mischungen davon.

5. Backfertiger, gefrorener Brotteig nach den Ansprüchen 1 bis 4, in welchem der Teig ferner ein oder mehrere der folgenden Bestandteile umfaßt: Kohlenhydratbrotverbesserer, Enzyme, insbesondere Xylanase, Amyloglucosidase und/oder Amylase, Ascorbinsäure und Reduktionsmittel, insbesondere Cystein.

6. Backfertiger, gefrorener Brotteig nach den Ansprüchen 1 bis 5, in welchem das Fett von einer Margarine mit einer Härte gemäß Haighton von mindestens 500 bei 20°C abgeleitet ist.

7. Backfertiger, gefrorener Brotteig nach den Ansprüchen 1 bis 6, der ein spezifisches Volumen vor dem Backen von 0,8-1,6 ml/g, insbesondere 1,0-1,4 ml/g, aufweist.

8. Backfertiger, gefrorener Brotteig nach den Ansprüchen 1 bis 7, der nach 33 Minuten langem Backen bei 170°C ein Produkt mit einem spezifischen Volumen (s.V.) von mindestens 2,6 ml/g, vorzugsweise mindestens 3,0 ml/g, insbesondere bis 6 ml/g, ergibt.

9. Backfertiger, gefrorener Brotteig nach den Ansprüchen 1 bis 8, der nach 33 Minuten langem Backen bei 170°C ein Aufgehen von mindestens 2,2, insbesondere mindestens 4,5, zeigt.

10. Gebackenes Franzosenbrot oder gebackenes Kastenbrot, hergestellt nach Backen eines geformten Teils des Brotteiges gemäß den Ansprüchen 1 bis 9.

## Revendications

1. Pâte à pain congelée prête à cuire, comprenant :
- un composant farineux, et (par rapport à la farine) :
30 - 70% en poids d'eau
0 - 10% en poids de graisse
0 - 3% en poids de protéine de lait
0,5 - 8% en poids de levure, facultativement combinée avec un levain chimique
0,1 - 4,0% en poids d'émulsifiant
0 - 10% en poids de sucre, à la condition préalable que si le sucre est absent, la quantité de graisse soit inférieure à 3% en poids,
le composant farineux étant composé de :
80 - 99% en poids de farine naturelle et
20 - 1% en poids de "farine artificielle"
et la farine artificielle consistant en :
30 à 70% en poids d'une protéine, en particulier un composé apparenté à la gélatine et 70 à 30% en poids d'un amidon modifié.

2. Pâte à pain congelée prête à cuire selon la revendication 1, dans laquelle le composé apparenté à la gélatine est choisi parmi la gélatine avec un degré bloom de 50 à 400, une gélatine non gélifiante avec un degré bloom de 0 à 50, une gélatine hydrolysée et les précurseurs de gélatine, comme le collagène;

3. Pâte à pain congelée prête à cuire selon les revendications 1-2, dans laquelle l'amidon modifié est un amidon réticulé, en particulier un amidon de maïs cireux réticulé.

4. Pâte à pain congelée prête à cuire selon les revendications 1-3, dans lequel l'émulsifiant comprend :
- un DATA-ester qui assure les performances de cuisson à la pâte, ou
- une lécithine, ou
- un monoester d'acide gras de saccharose, ou
- un monoglycéride, ou
- leurs mélanges.

5. Pâte à pain congelée prête à cuire selon les revendications 1-4, dans laquelle la pâte comprend de plus un ou plusieurs des ingrédients suivants : des hydrates de carbone d'amélioration du pain, des enzymes, en particulier la xylanase, l'amyloglucosidase et/ou l'amylase, l'acide ascorbique et des agents réducteurs, en particulier la cystéine.

6. Pâte à pain congelée prête à cuire selon les revendications 1-5, dans laquelle la graisse est dérivée d'une margarine avec une dureté C selon HAIGHTON d'au moins 500 à 20°C.

7. Pâte à pain congelée prête à cuire selon les revendications 1-6, cette pâte ayant un volume spécifique avant cuisson de 0,8-1,6 ml/g, en particulier 1,0-1,4 ml/g.

8. Pâte à pain congelée prête à cuire selon les revendications 1-7, cette pâte produisant lors de la cuisson pendant 33 minutes à 170°C un produit avec un volume spécifique (v.s) d'au moins 2,6 ml/g, de préférence au moins 3,0 ml/g, en particulier jusqu'à 6 ml/g.

9. Pâte à pain congelée prête à cuire selon les revendications 1-8, cette pâte montrant lors de la cuisson pendant 33 minutes à 170°C une élasticité au four d'au moins 2,2, en particulier au moins 4,5.

10. Pain français cuit ou pain anglais cuit produit après cuisson d'une partie moulée de la pâte à pain selon les revendications 1-9.
